# EUROPEAN PATENT APPLICATION

(11) **EP 3 291 148 A1**
(43) Date of publication of application: **07.03.2018**
(21) Application number: 16198038.8
(22) Date of filing: 09.11.2016
(51) Int. Cl.: G06Q 10/00, G07F 7/06

(54) **SYTEM AND METHOD FOR TRADING VALUABLE ITEMS**

(30) Priority: 31.08.2016 TW 105128116
(71) Applicant: Yang, Chen, Taoyuan 338 (TW)
(72) Inventor: Yang, Chen, Taoyuan 338 (TW)
(74) Representative: De Anna, Pier Luigi

(57) **Abstract**

A system for transacting items via network is disclosed. The system includes an electronic data processing device, a user application device, a recycling device and a processing device. The electronic data processing device registers data of a user and a valuable item. The user application device is networked to the electronic data processing device for receiving and encoding the data of the user and the valuable item to generate an electronic tag. The recycling device is networked to the electronic data processing device for recording the data of the user and confirming the data of the valuable item according to the electronic tag. The processing device is networked to the electronic data processing device for sorting the valuable item, recording a weight of the valuable item to generate a receiving data, and sending the receiving data to the electronic data processing device.

## Description

### Background of the Invention

### 1. Technical Field

The invention relates to transaction of items, particularly to transaction via network.

### 2. Related Art

With develop of technology, increase of population and change of life style, litter has also dramatically increased. To reduce processing cost of litter and impact on the natural environment, many nations' governments research various policies to reduce generation of litter.

Generally speaking, items are recycled and sorted by staff. After that, the recycled items are transported to a recycling center to weigh, and then the staff must manually record the sort and weight of the recycled items. Finally, the price can be confirmed to pay.

However, such a recycling manner relies upon many staff to contribute labor and time. Because of difficulty of integration of information and human errors, the recycling efficiency and resource exchange are not good enough.

In addition, for communities, office buildings, schools and plants, they usually have recycling stations to temporarily store, and then the recycled items will be handled by a recycling company. However, such a manner is usually based on a contract weight and cannot be fair and accurate.

### Summary of the Invention

An object of the invention is to provide a method and system for trading valuable items, which allows users to check their respective information and integrates transactional information for different users so that the transacting process can be simplified and the transactional efficiency can be improved.

To accomplish the above object, the system for trading valuable items of the invention includes an electronic data processing device, a user application device, a recycling device and a processing device. The electronic data processing device registers data of a user and a valuable item. The user application device is networked to the electronic data processing device for receiving and encoding the data of the user and the valuable item to generate an electronic tag. The recycling device is networked to the electronic data processing device for recording the data of the user and confirming the data of the valuable item according to the electronic tag. The processing device is networked to the electronic data processing device for sorting the valuable item, recording a weight of the valuable item to generate a receiving data, and sending the receiving data to the electronic data processing device.

The method for trading valuable items of the invention includes the steps of: a) receiving data of a user and a valuable item; b) encoding the data of the user and the valuable item to generate an electronic tag; c) receiving the valuable item by recording the data of the user and confirming the data of the valuable item according to the electronic tag; and d) sorting the valuable item and recording a weight of the valuable item to generate a recycling record.

### Brief Description of the Drawings

FIG 1 is a block diagram the system of the invention;
FIG. 2 is a block diagram of the user application device of the invention;
FIG 3 is a block diagram of the recycling device of the invention;
FIG. 4 is a block diagram of the processing device of the invention;
FIG. 5 is a flowchart of the method of the invention;
FIG. 6 is a flowchart of the method of the invention with adding an electronic tag identification device and camera;
FIG. 7 is another flowchart of the method of the invention;
FIG. 8 is still another flowchart of the method of the invention; and
FIG. 9 is yet another flowchart of the method of the invention.

### Detailed Description of the Invention

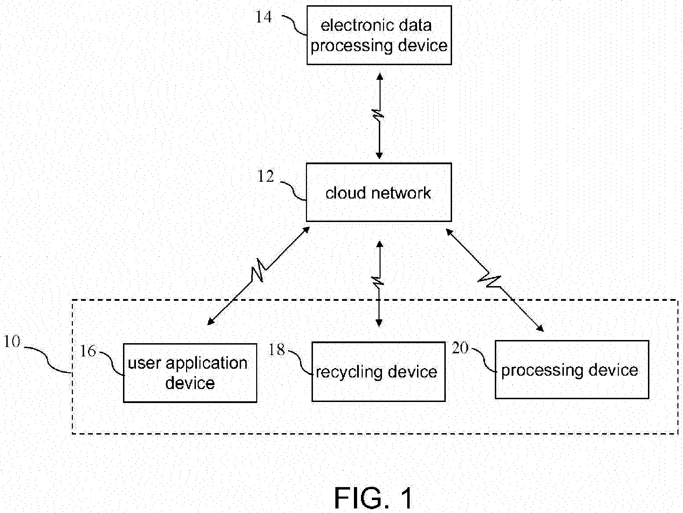

Please refer to FIG. 1. The system 10 for trading valuable items utilizes cloud network 12 to connect an electronic data processing device 14. The electronic data processing device 14 can register data of a user and a valuable item for transaction.

The system 10 includes a user application device 16, a recycling device 18 and a processing device 20.The user application device 16, recycling device 18 and processing device 20 are connected to the electronic data processing device 14 via cloud network 12.

The user application device 16 is networked to the electronic data processing device 14 for receiving and encoding the data of the user and the valuable item to generate an electronic tag.

The recycling device 18 is networked to the electronic data processing device 14 for recording the data of the user and confirming the data of the valuable item according to the electronic tag.

The processing device 20 is networked to the electronic data processing device 14 for sorting the valuable item, recording a weight of the valuable item to generate a receiving data, and sending the receiving data to the electronic data processing device 14.

In addition, the user application device 16 is a mobile device or desktop computer. The electronic data processing device 14 is a server with cloud computing. The user data includes a user's name, address, phone number, member number and bank account number. The data of a valuable item includes its name and price.

The electronic data processing device 14 searches a recycling record according to data of the user and valuable item and computes a transaction price according the weight and unit price of the valuable item.

In the system 10 of the invention, the user application device 16 may be installed with a mobile application (app). When a user wants to recycle a recyclable item, he or she can use the user application device 16 to find out a member service website provided by the invention. Next, the user application device 16 allows the user to check user data, valuable item data, recycling record, and weight and price of valuable items.

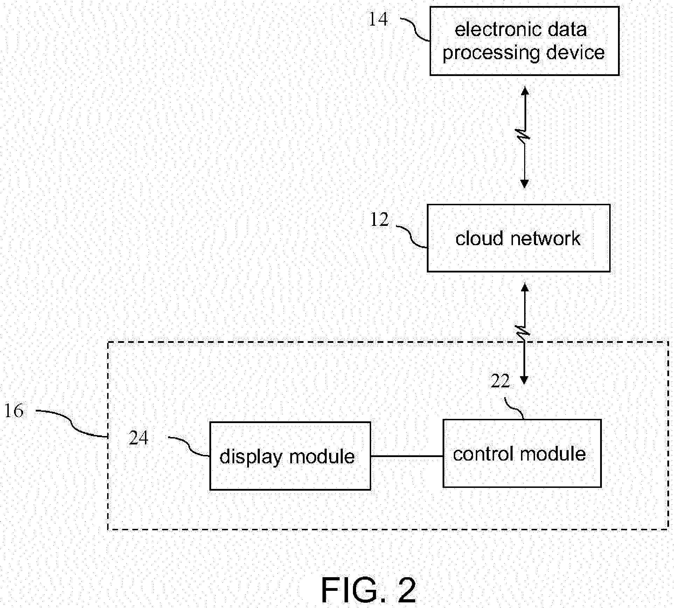

Please refer to FIG. 2. The user application 16 further includes a control module 22 connected to the electronic data processing device 14 via the cloud network 12 for receiving user data and valuable item data. A display module 24 is electrically connected to the control module 22 for showing the user data and valuable item data.

The control module 22 is used for receiving and encoding the data of the user and the valuable item to generate an electronic tag which is shown on the display module 24. The electronic tag may be a barcode of 1D or 2D.

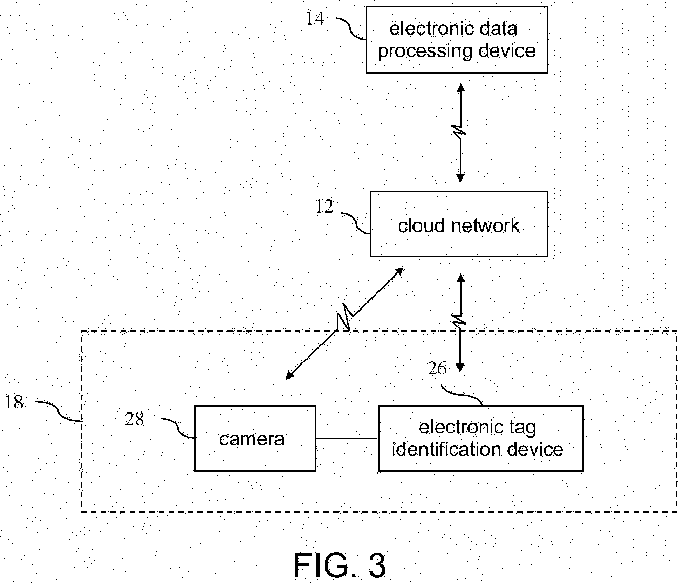

Please refer to FIG. 3. The recycling device 18 further includes an electronic tag identification device 26 and a camera 28. The electronic tag identification device 26 is connected to the electronic data processing device 14 via the cloud network 12 for reading user data and valuable item data stored in the electronic tag and sending the data to the electronic data processing device 14.

The camera 28 is also connected to the electronic data processing device 14 via the cloud network 12. The camera 28 is used for shooting a user and sending an image of the user to the electronic data processing device 14 for identification. The recycling device 18 may be a receiving space of 1 to 2 cubic meter.

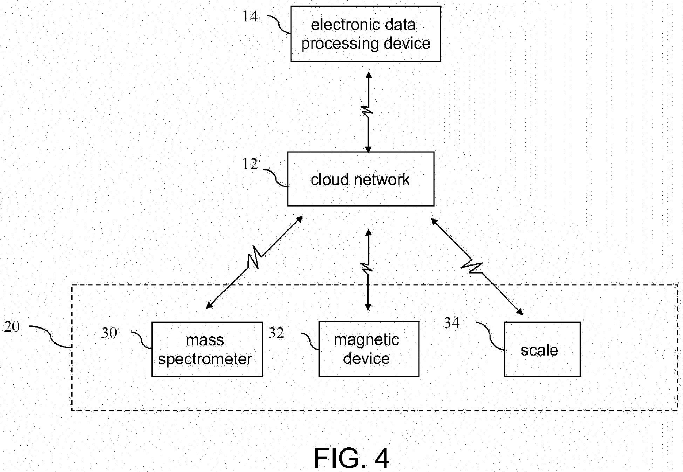

As shown in FIG. 4, the processing device 20 further includes a mass spectrometer 30, a magnetic device 32 and a scale 34, all of which are connected to the electronic data processing device 14 via the cloud network 12. The mass spectrometer 30 is used for distinguishing composition of a plastic type of the valuable items to generate a first identification data and sending the first identification data to the electronic data processing device 14. The electronic data processing device 14 will compare the first identification data with the recycling record.

The magnetic device 32 is used for distinguishing a metal type of valuable items to generate a second identification data. The electronic data processing device 14 will compare the second identification data with the recycling record.

The scale 14 can weigh the valuable item to generate a weight data and send the weight data to the electronic data processing device 14. The electronic data processing device 14 will compare the weight data with the recycling record.

The recycling device 18 may be a box with an anti-thief opening. The anti-thief opening will open after an electronic tag has been identified and will close after a valuable item has been put in the box.

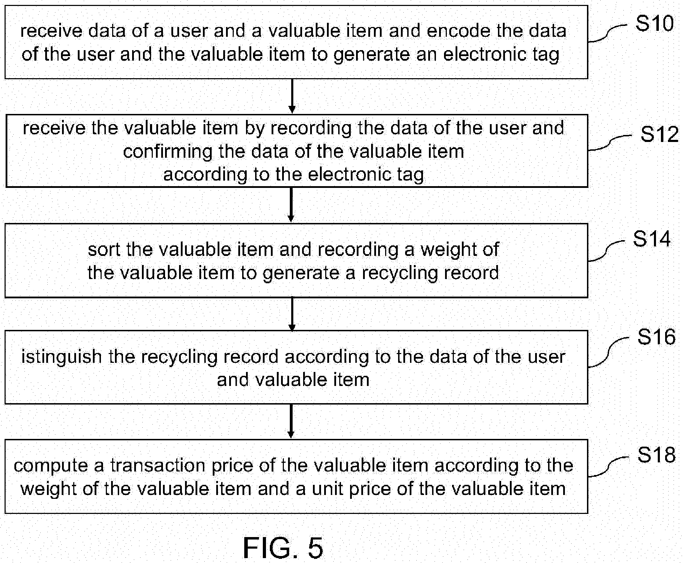

Please refer to FIG 5, which shows the method for trading valuable items of the invention. In step S10, receive data of a user and a valuable item and encode the data of the user and the valuable item to generate an electronic tag. In step S12, receive the valuable item by recording the data of the user and confirming the data of the valuable item according to the electronic tag. In step S 14, sort the valuable item and recording a weight of the valuable item to generate a recycling record.

In step S16, distinguish the recycling record according to the data of the user and valuable item. In step S18, compute a transaction price of the valuable item according to the weight of the valuable item and a unit price of the valuable item.

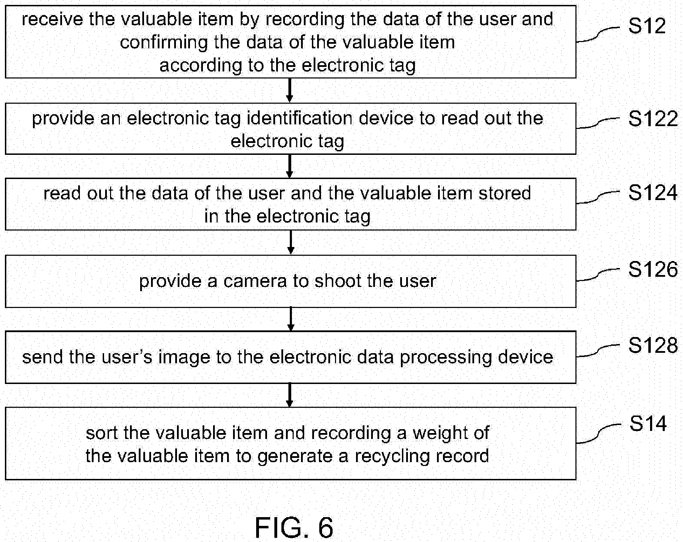

Please refer to FIGS. 3 and 6. After step S12, provide an electronic tag identification device 26 to read out the electronic tag in step S122, and then read out the data of the user and the valuable item stored in the electronic tag in step 124

After S124, provide a camera 28 to shoot the user in step 126. Next, in step S128, send the user's image to the electronic data processing device 14. After that, step S 14 is performed, sort the valuable item and recording a weight of the valuable item to generate a recycling record.

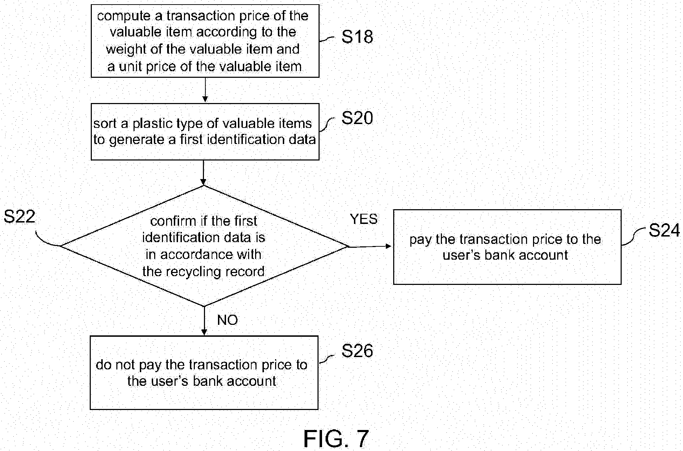

Please refer to FIG. 7. After step S18, sort a plastic type of valuable items to generate a first identification data in step S20. Next, in step S22, confirm if the first identification data is in accordance with the recycling record. In step S24, pay the transaction price to the user's bank account if yes in step S22. In step S26, do not pay the transaction price to the user's bank account if no in step S22.

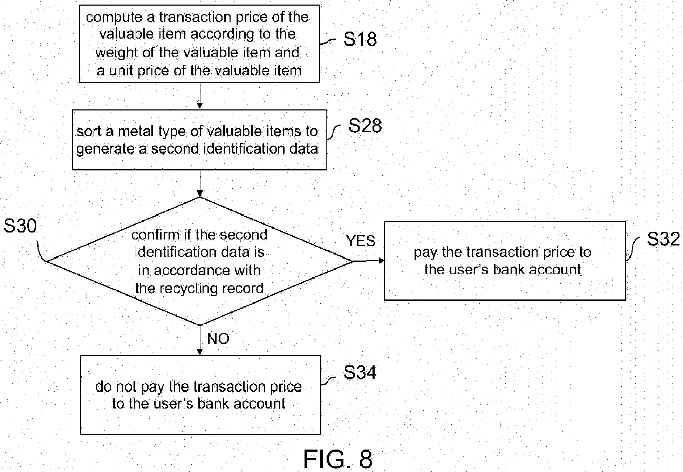

Please refer to FIG. 8. After step S18, sort a metal type of valuable items to generate a second identification data in step S28. Next, in step S30, confirm if the second identification data is in accordance with the recycling record. In step S32, pay the transaction price to the user's bank account if yes in step S30. In step S34, do not pay the transaction price to the user's bank account if no in step S30.

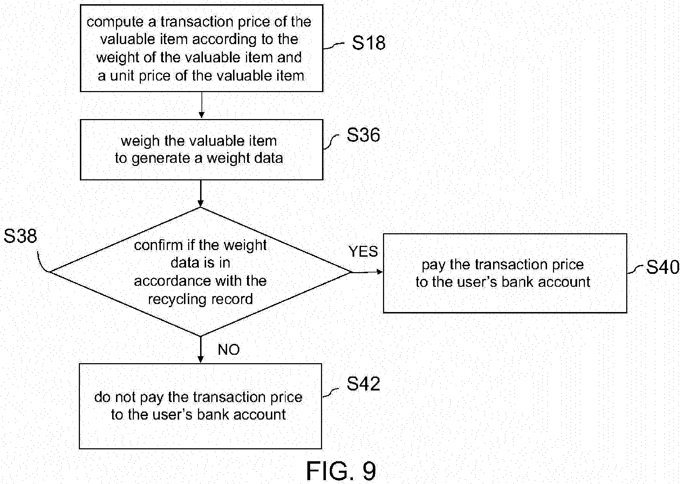

Please refer to FIG. 9. After S18, in step S36, weigh the valuable item to generate a weight data. Next, in step S38, confirm if the weight data is in accordance with the recycling record. In step S40, pay the transaction price to the user's bank account if yes in step S38. In step S42, do not pay the transaction price to the user's bank account if no in step S38.

In addition, the mass spectrometer, magnetic device and scale may be integrated into an automatic conveying platform. When a valuable item is put on the automatic conveying platform, the valuable item will be processed by the mass spectrometer, magnetic device and scale to generate a first identification data, a second identification data and a weight data. Pay the transaction price to the user if the first identification data, second identification data and weight data are in accordance with the recycling record.

## Claims

1. A system for trading valuable items, comprising:
an electronic data processing device (14) for registering data of a user and a valuable item;
a user application device (16), networked to the electronic data processing device (14) for receiving and encoding the data of the user and the valuable item to generate an electronic tag;
a recycling device (18), networked to the electronic data processing device (14) for recording the data of the user and confirming the data of the valuable item according to the electronic tag; and
a processing device (20), networked to the electronic data processing device (14) for sorting the valuable item, recording a weight of the valuable item to generate a receiving data, and sending the receiving data to the electronic data processing device (14).

2. The system of claim 1, wherein the user application (16) further comprises:
a control module (22) networked to the electronic data processing device (14) for receiving user data and valuable item data; and
a display module (24) is electrically connected to the control module (22) for showing the user data and valuable item data.

3. The system of claim 1, wherein the electronic tag is a barcode of 1D or 2D.

4. The system of claim 1, wherein the user application device (16) is a mobile device or desktop computer.

5. The system of claim 1, wherein the electronic data processing device (14) is a server with cloud computing.

6. The system of claim 1, wherein the recycling device (18) further comprises an electronic tag identification device (26) networked to the electronic data processing device (14) for reading user data and valuable item data stored in the electronic tag.

7. The system of claim 1, wherein the recycling device (18) further comprises a camera (28) networked to the electronic data processing device (14) for shooting a user and sending an image of the user to the electronic data processing device (14).

8. The system of claim 1, wherein the processing device (20) further comprises a mass spectrometer (30) networked to the electronic data processing device (14) for distinguishing composition of a plastic type of the valuable items to generate a first identification data and sending the first identification data to the electronic data processing device (14), and the electronic data processing device (14) compares the first identification data with the recycling record.

9. The system of claim 1, wherein the processing device (20) further comprises a magnetic device (32) networked to the electronic data processing device (14) for distinguishing a metal type of valuable items to generate a second identification data, and the electronic data processing device (14) compares the second identification data with the recycling record.

10. The system of claim 1, wherein the processing device (20) further comprises a scale (34) networked to the electronic data processing device (14) for weighing the valuable item to generate a weight data and send the weight data to the electronic data processing device (14), and the electronic data processing device (14) compares the weight data with the recycling record.

11. A method for trading valuable items, comprising the steps of:
a) receiving data of a user and a valuable item;
b) encoding the data of the user and the valuable item to generate an electronic tag;
c) receiving the valuable item by recording the data of the user and confirming the data of the valuable item according to the electronic tag; and
d) sorting the valuable item and recording a weight of the valuable item to generate a recycling record.

12. The method of claim 11, wherein the step d) further comprise the steps of:
distinguishing the recycling record according to the data of the user and valuable item; and
computing a transaction price of the valuable item according to the weight of the valuable item and a unit price of the valuable item.

13. The method of claim 11, wherein the step c) further comprises the steps of:
providing an electronic tag identification device (26) to read out the electronic tag; and
reading out the data of the user and the valuable item stored in the electronic tag.

14. The method of claim 11, wherein the step c) further comprise the steps of:
providing a camera (28) to shoot the user; and
sending the user's image to an electronic data processing device (14).

15. The method of claim 12, further comprising the steps after the distinguishing and computing steps:
sorting a plastic type of valuable items to generate a first identification data;
confirming if the first identification data is in accordance with the recycling record; and
paying the transaction price to the user's bank account if yes in the previous step and not paying if no.

16. The method of claim 15, further comprising the steps of:
weighing the valuable item to generate a weight data;
confirming if the weight data is in accordance with the recycling record; and
paying the transaction price to the user's bank account if yes in the previous step and not paying the transaction price to the user's bank account if no.

17. The method of claim 16, further comprising the steps of:
weighing the valuable item to generate a weight data;
confirming if the weight data is in accordance with the recycling record; and
paying the transaction price to the user's bank account if yes in the previous step and not paying the transaction price to the user's bank account if no.
